# EUROPEAN PATENT SPECIFICATION

(11) **EP 1 724 182 B1**
(45) Date of publication and mention of the grant of the patent: **26.09.2007**
(21) Application number: 06008565.1
(22) Date of filing: 25.04.2006
(51) Int. Cl.: B62D 5/07, B66F 9/22

(54) **Oil pressure supply device for industrial vehicle**
Öldruckversorgung für ein Industriefahrzeug
Dispositif d'alimentation de pression hydraulique pour un véhicule industriel

(30) Priority: 17.05.2005 JP 2005143875
(43) Date of publication of application: 22.11.2006
(73) Proprietor: NISSAN MOTOR CO., LTD., Yokohama-shi Kanagawa-ken (JP)
(72) Inventor: Kooriyama, Masayuki, Oume-shi Tokyo 198-0061 (JP)
(74) Representative: Weber, Joachim

(56) References cited:
- EP-A- 0 251 290

## Description

### FIELD OF THE INVENTION

This invention relates to an oil pressure supply device for steering and cargo handling of an industrial vehicle such as a fork-lift truck.

### BACKGROUND OF THE INVENTION

Japanese Patent No. 2645515 or the corresponding United States Patent No. 4,759,182, and JP2004-196110A, disclose an oil pressure supply device which distributes discharge oil from an oil pump to the power steering device and cargo handling device of an industrial vehicle, such as a fork-lift truck, via a pilot operation load detection type priority flow rate control valve.

The priority flow rate control valve distributes oil preferentially to the power steering device, and distributes excess oil to the cargo handling device.

In order to supply sufficient oil to both of these devices when both the power steering device and cargo handling device are operating, the oil pump is operated at high speed and discharges a large amount of oil. If operation of the cargo handling device stops, the oil pump reduces the oil discharge flow rate.
A further oil pressure supply device according to the preamble of claim 1 is disclosed in European Patent Application No. 0251290.

### SUMMARY OF THE INVENTION

However, in such an oil pressure supply device, if an open-center type spool valve which drains oil in a neutral section, is used as a cargo handling control valve which controls the oil supply to the actuator of the cargo handling device, when a change-over is performed from the state where both the power steering device and cargo handling device are operating, to cargo handling device operation stop control, the following problems may occur.

Specifically, when the cargo handling control valve is changed over to the neutral section, the oil supplied to the cargo handling control valve from the priority flow rate control valve is drained, and the pressure of the oil passage leading from the priority flow rate control valve to the cargo handling control valve decreases. On the other hand, when the cargo handling device stops operating, the oil pump reduces the oil discharge amount, and the discharge pressure falls as a result.

As for the priority flow rate control valve, due to this pressure change, the oil pump changes over to supply oil only to the power steering device. However, during the period until the pressure change is transmitted to the priority flow rate control valve as a pilot pressure and the priority flow rate control valve changes over to the new section, since oil discharged from the oil pump is drained via the cargo handling control valve in the neutral section, the pressure of the circuit temporarily decreases by a substantial amount, and the steering assist force of the power steering device in operation consequently decreases. As a result, control of the steering wheel by the operator temporarily becomes heavy, i.e., "kickback" occurs.

It is therefore an object of the invention to prevent kickback accompanying operation stop of a cargo handling device in an oil pressure supply device which distributes oil to a power steering device and cargo handling device using a priority flow rate control valve.

In order to achieve the above object, this invention provides an oil pressure supply device which supplies pressurized oil to an oil pressure power steering device and an oil pressure cargo handling device of an industrial vehicle.

The device comprises an oil pump which increases a pressurized oil discharge flow rate with operation of the cargo handling device, and decreases the pressurized oil discharge flow rate with operation stop of the cargo handling device, a priority flow rate control valve which preferentially distributes pressurized oil discharged by the oil pump to the power steering device, and distributes excess oil to the cargo handling device, a cargo handling control valve which changes over between a cargo handling section which supplies the pressurized oil supplied from the priority flow rate control valve to the cargo handling device, and a non-cargo handling section which does not supply the pressurized oil supplied from the priority flow rate control valve to the cargo handling device according to an external operation, and an orifice which drains pressurized oil supplied to the cargo handling control valve under a predetermined back pressure when the non-cargo handling section is selected.

The details as well as other features and advantages of this invention are set forth in the remainder of the specification and are shown in the accompanying drawings.

### BRIEF DESCRIPTION OF THE DRAWINGS

FIG. 1 is a schematic diagram of an oil pressure supply device according to this invention for a fork-lift truck.

FIG. 2 is a circuit diagram of the oil pressure supply device.

FIGs. 3A-3C are timing charts describing a pressure change when a cargo handling device stops operation under the oil pressure supply device.

FIG. 4 is an oil circuit diagram of the principal parts of the oil pressure supply device according to a second embodiment of the invention

FIG. 5 is an oil circuit diagram of the principal parts of the oil pressure supply device according to a third embodiment of the invention.

### DESCRIPTION OF THE PREFERRED EMBODIMENTS

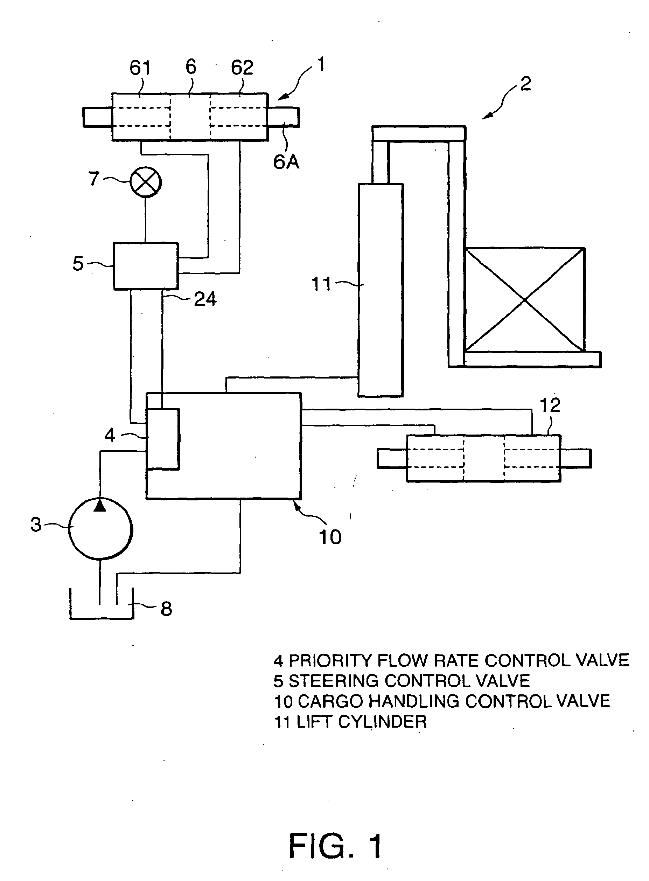

Referring to FIG. 1 of the drawings, a fork-lift truck as industrial vehicle is provided with a full oil power steering device 1 and cargo handling device 2.

The power steering device 1 comprises a steering cylinder 6 which turns the steered wheels of the vehicle. The steering cylinder 6 is a device known in the art having two oil chambers. A piston rod 6A is displaced by the oil supplied to one oil chamber, and the steering wheel of the vehicle is thereby turned to the right or left by the rotation of a steering arm connected to the piston rod 6A, not shown. The oil discharged by the oil pump 3 is supplied to the steering cylinder 6 via the priority flow rate control valve 4 and a steering control valve 5.

The cargo handling device 2 comprises a lift cylinder 11 which raises and lowers the fork of the fork-lift truck by oil pressure, and a tilt cylinder 12 which tilts the mast of the fork-lift truck forward or backward by oil pressure. The lift cylinder 11 has a single lift oil chamber, fork-lift being performed according to supply of oil to the lift oil chamber, and lowering of the fork being performed according to discharge of oil from the lift oil chamber. The tilt cylinder 12 comprises a front tilt oil chamber which tilts the mast forward, and a rear tilt oil chamber which tilts the mast backward.

Oil discharged by the oil pump 3 is supplied to the lift cylinder 11 and tilt cylinder 12 via the priority flow rate control valve 4 and a cargo handling control valve 10.

The oil pump 3 is usually driven by an internal combustion engine for driving the vehicle, the internal combustion engine maintaining the minimum discharge flow rate required for operation of the power steering device 1 even in the idle state. The rotation speed of the internal combustion engine is controlled according to the operation of the cargo handling device 2. Due to this control of engine rotation speed, during operation of the cargo handling device 2, the oil pump 3 increases the discharge flow rate, and reduces the discharge flow rate when the cargo handling device 2 stops operation.

The priority flow rate control valve 4 preferentially supplies oil at a flow rate required by the power steering device 1 from the discharge oil of the oil pump 3 to the power steering device 1, and supplies the remaining oil to the cargo handling control valve 10.

The steering control valve 5 operates according to the steering of the steering wheel 7, and supplies oil discharged by the oil pump 3 via the priority flow rate control valve 4 to one of the two oil chambers of the steering cylinder 6.

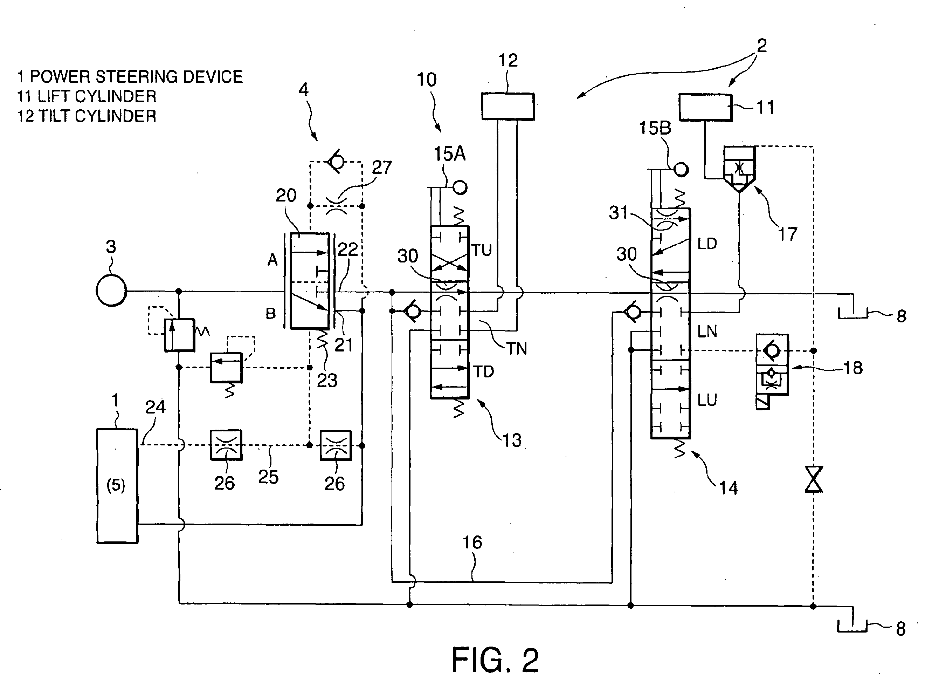

Next, referring to FIG. 2, the priority flow rate control valve 4 has a priority discharge port 21 and residual oil discharge port 22. The steering control valve 5 is connected to the priority discharge port 21, and the cargo handling control valve 10 is connected to the residual oil discharge port 22.

The priority flow rate control valve 4 has a valve spool 20, and distributes the discharge oil of the oil pump 3 between the priority discharge port 21 and residual oil discharge port 22 in a ratio according to the displacement position of the valve spool 20. For this purpose, the priority flow rate control valve 4 has a section A which connects the discharge oil of the oil pump 3 to the priority discharge port 21, and a section B which connects the discharge oil of the oil pump 3 to the residual oil discharge port 22.

The priority flow rate control valve 4 is provided with a spring 23 which pushes the valve spool 20 in a direction which makes the discharge oil of the oil pump 3 flow into the outflow port 21, i.e., increases the application ratio of section B.

The power steering device 1 is provided with a load signal port 24 which outputs a signal pressure according to the load. The load signal port 24 is connected to the priority discharge port 21 via two control orifices 26, the pressure between the two control orifices 26 is led to the priority flow rate control valve 4 from a load signal pressure line 25 as the load signal pressure, and pushes the valve spool 20 in the same direction as the spring 23.

On the other hand, the pressure of the priority discharge port 21 is led to the priority flow rate control valve 4 via a damping orifice 27 as a feedback pressure, and pushes the valve spool 20 in an opposite direction to the spring 23 and load signal pressure, i.e., in the direction which increases the application ratio of section A.

The power steering device 1 increases the pressure in the load signal pressure port 24 as an amount of the pressurized working oil becomes deficient with respect to an assist force for steering the steered wheels that is designated by the rotation speed of the steering wheel 7, thereby increasing the pushing force on the valve spool 20 in the direction which increases the application ratio of the section B. Correspondingly, the distribution amount from the priority discharge port 21 to the steering control valve 5 increases relatively to the distribution amount from the residual oil discharge port 22 to the cargo handling control valve 10.

The cargo handling control valve 10 comprises a tilt control valve 13 which controls the tilt cylinder 12, and a lift control valve 14 which controls the lift cylinder 11. The change-over operations of the tilt control valve 13 and the lift control valve 14 are performed by control levers 15A, 15B operated by the operator of the fork-lift truck, respectively.

The tilt control valve 13 is connected to the residual oil discharge port 22. The tilt control valve 13 is an open center type spool valve having a rear tilt section TU, neutral section TN and front tilt section TD which are changed over by operation of the control lever 15A,

The neutral section TN is a section which shuts off outflow and inflow of oil from and to the front tilt oil chamber of the tilt cylinder 12, and supplies oil from the residual oil discharge port 22 to the lift control valve 14 via an orifice 30. The front tilt section TD is a section which shuts off the oil passage leading to the lift control valve 14, supplies oil from the residual oil discharge port 22 to the front tilt oil chamber of the tilt cylinder 12, and discharges oil from the rear tilt chamber to an oil tank 8. The rear tilt section TU is a section which shuts off the oil passage leading to the control valve 14, supplies oil supplied from the residual oil discharge port 22 to the rear tilt oil chamber of the tilt chamber 12, and discharges oil from the front tilt oil chamber to the oil tank 8.

The cargo handling control valve 10 has a bypass passage 16 which directly supplies oil to the lift control valve 14 without passing through the tilt control valve 13.

The lift control valve 14 is an open center type spool valve having a descending section LD, neutral section LN and lifting section LU which are changed over by the control lever 15B.

The neutral section LN is a section which returns the oil supplied from the tilt control valve 13 to the oil tank 8 via an orifice 30, and shuts off outflow and inflow of oil from and to the lift cylinder 11. The lifting section LU is a section which shuts off the oil supply from the tilt control valve 13, and supplies oil supplied from the bypass passage 16 to the lift cylinder 11. The descending section LD is a section which returns the oil supplied from the tilt control valve 13 to the oil tank 8 via an orifice 31, and discharges the oil of the lift cylinder 11 to the oil tank 8.

In this embodiment, the tilt control valve 13 is disposed upstream of the lift control valve 14 with regard to circulation of oil supplied from the residual oil discharge port 22 in the neutral sections TN, LN. However, either one of these valves may be disposed upstream of the other.

The oil pump 3 always maintains the oil flow rate required for operation of the power steering device 1. The oil pressure supply device comprises a sensor which detects the operation position of the control levers 15A, 15B, and the engine control device of another unit controls the operation of the internal combustion engine so that it accelerates according to these operation positions. Therefore, the oil pump 3 increases the discharge amount according to the operation positions of the control levers 15A, 15B, and ensures the oil supply flow rate when both power steering and cargo handling are performed simultaneously. The operation positions of the control levers 15A 15B when acceleration of the internal combustion engine is performed, are specifically the rear tilt section TU and front tilt section TD of the tilt control valve 13, and the lift section LU of the lift control valve 14. In the following description, these sections are collectively referred to as the cargo handling section. The operation positions of the control levers 15A and 15B when acceleration of the internal combustion engine is not performed, are the neutral section TN of the tilt control valve 13, and the neutral section LN and descending section LD of the lift control valve 14. In the following description, these sections are collectively referred to as the non-cargo handling section.

The orifice 30 respectively provided in the tilt control valve 13 and lift control valve 14, and the orifice 31 provided in the lift control valve 14, are both set to have an inner diameter which generates a target back pressure relative to the flow rate. Typical diameters of the orifices 30, 31 are 1-5mm.

A shutoff valve 17 is interposed between the lift cylinder 11 and lift control valve 14. The shutoff valve 17 is synchronized with a descending solenoid valve 18 which operates on a signal from a controller, not shown. When the descending solenoid valve 18 is in a descent prohibition section, the shutoff valve 17 shuts off oil communication with the lift cylinder 11 and lift control valve 14, and when the descending solenoid valve 18 is in a descent permission section, it permits communication with the lift cylinder 11 and lift control valve 14.

In the fork-lift truck having the above construction, when the ignition key with which the fork-lift truck is provided is switched ON and the internal combustion engine starts, the operation of the oil pump 3 is started. The discharge oil of the oil pump 3 is supplied to the priority flow rate control valve 4, and the priority flow rate control valve 4 distributes oil to the steering control valve 5 and cargo handling control valve 10.

When the steering wheel 7 is not operated, the load signal pressure inputted into the priority control valve 4 from the load signal port 24 of the power steering device 1 is low pressure. Therefore, in the priority flow rate control valve 4, the application ratio of section A is higher than section B, and the oil supplied to the steering control valve 5 is suppressed to the minimum flow rate.

Here, when both the tilt control valve 13 and lift control valve 14 that form the cargo handling control valve 10 are in the neutral sections TN, NL, high pressure oil supplied to the cargo handling control valve 10 from the priority flow rate control valve 4 is returned to the oil tank 8 via the orifice 30 of the neutral sections TN, NL. In this case, a back pressure corresponding to the flow passage resistance of each of the orifices 30, is generated upstream of the tilt control valve 13 and lift control valve 14.

When the internal combustion engine is rotating in the idle state, since the oil pump 3 is rotating at low rotation speed, this back pressure is maintained low. Likewise, when the tilt control valve 13 is in the neutral section TN and the lift control valve 14 is in the descending section LD, high pressure oil supplied to the cargo handling control valve 10 from the priority flow rate control valve 4 flows back to the oil tank 8 via the orifice 30 of the neutral section TN and the orifice 31 of the descending section LD. At this time, a back pressure corresponding to the passage flow rate is generated upstream of the tilt control valve 13 based on the resistance of the orifice 30 and upstream of the lift control valve 14 based on the resistance of the orifice 31, respectively. In other words, when both the tilt control valve 13 and lift control valve 14 are in the non-cargo handling section, the orifices 30, 31 generate a back pressure in the oil flow passages.

When the forward/reverse lever of the fork-lift truck is changed over to the forward position or reverse position from the neutral position and the accelerator pedal is depressed, the drive wheels rotate via a gearbox, and the fork-lift truck moves forward or reverses. The discharge flow rate of the oil pump 3 also increases according to the rise of engine rotation speed, and the oil flow rate of the cargo handling control valve 10 increases. As a result, the back pressure upstream of the tilt control valve 13 and lift control valve 14 also rises.

If the steering wheel 7 is steered while the vehicle is moving forwards, the load signal pressure inputted from the load signal pressure line 25 rises.

As a result, the valve spool 20 of the priority flow rate control valve 4 increases the application ratio of section B, increases the oil flow rate supplied to the power steering device 1, and correspondingly, the oil flow rate supplied to the cargo handling device 2 is decreased. The oil supplied to the power steering device 1 is supplied to one of the oil chambers of the steering cylinder 6 via the steering control valve 5, and changes the direction of the steered wheels according to the steering direction of the steering wheel 7.

In this state, if the operator operates the control lever 15A or 15B, engine rotation speed will increase according to the operation position, and the discharge flow rate of the oil pump 3 will increase.

However, since the load signal pressure or feedback pressure does not change in this state, the priority flow rate control valve 4 maintains the application ratio of section B, which is higher than that of section A.

Therefore, the oil flow rate supplied to the steering control valve 5 does not fall, and the oil flow rate supplied to the cargo handling device 2 increases corresponding to the increase in the discharge flow rate of the oil pump 3.

The oil supplied to the cargo handling device 2 is used, when the control lever 15A is operated, to tilt the mast via the tilt cylinder 12, and when the control lever 15B is operated, to raise the fork via the lift cylinder 11. Hence, the mast is tilted according to the operation of the control lever 15A, and the fork is raised according to the operation of the control lever 15B.

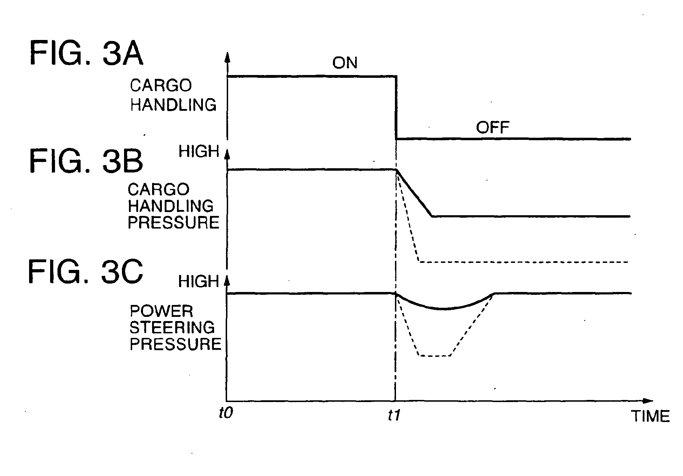

Referring to FIGs. 3A-3C, the power steering device 1 and cargo handling device 2 both operate in the interval from the time *t0* to *t1.*

The cargo handling pressure of FIG. 3B shows the oil pressure supplied to the cargo handling device 2 from the priority flow rate control valve 4. The power steering pressure of FIG. 3C shows the oil pressure supplied to the power steering device 1 from the priority flow rate control valve 4. As shown in these figures, in the interval from time *t0* to *t1*, both pressures are maintained at a high level.

When operation of the cargo handling device 2 stops at the time *t1* as shown in FIG. 3A, i.e., when it shifts to the non-cargo handling state where the control lever 15A is in the neutral section TN, and the control lever 15B is in the neutral section LN, the internal combustion engine which is controlled according to the operation position of the control levers 15A, 15B reduces the rotation speed, and the oil flow rate supplied to the priority flow rate control valve 4 from the oil pump 3 decreases.

In this state, the oil supplied to the priority flow rate control valve 4 is returned to the oil tank 8 via the orifice 30 of the neutral section TN of the tilt control valve 13, and the orifice 30 of the neutral section LN of the lift control valve 14. At this time, because of the back pressure due to the two orifices 30, the pressure of the cargo handling device 2 does not decrease immediately, but as shown by the solid line of FIG. 3A, falls gradually.

On the other hand, if the orifices 30 in the neutral section TN of the tilt control valve 13, and the neutral section LN of the lift control valve 14, are not provided, when the operation of the cargo handling device 2 is stopped, the pressure of the oil supply line from the priority flow rate control valve 4 to the cargo handling control valve 10 falls rapidly, as shown by the dashed line of the figure. In the figure, the difference between the solid line and dashed line when the pressure is fixed after the time *t1,* is equivalent to the back pressure due to the orifices 30.

The rapid pressure decrease of the cargo handling device 2 causes a drop in the discharge pressure of the oil pump 3. Also , if the feedback pressure of the priority discharge port 21 declines, the load signal pressure will become relatively high, and the valve spool 20 of the priority flow rate control valve 4 will be displaced in the direction which increases the application ratio of section B. Here, damping is added to the load signal pressure applied to the valve spool 20 due to the orifice 26, and to the feedback pressure due to the orifice 27, respectively, and the valve spool 20 displaces slowly. During this delay period, oil flows back to the oil tank 8 in large amount from the neutral section TN of the tilt control valve 13 and the neutral section LN of the lift control valve 14, so the discharge pressure of the oil pump 3 falls sharply, and correspondingly, the pressure of the power steering device 1 also considerably decreases.

After displacement of the valve spool 20 is completed, the flow rate of oil which flows back to the oil tank 8 via the tilt control valve 13 and lift control valve 14 largely decreases, so the pressure of the power steering device 1 returns to the original state.

If the orifices 30 are not provided, therefore, as shown by the dashed line of FIG. 3C, the pressure of the power steering device 1 temporarily rapidly decreases immediately after the time *t1.* As a result, the assist force which the power steering device 1 gives to the steering operation temporarily decreases, and resistance to manual operation of the steering wheel 7 increases rapidly, i.e., kickback occurs.

However, in the oil pressure supply device according to the invention, the pressure of the cargo handling device 2 decreases gradually due to the orifices 30, and there is also little pressure decrease width due to the back pressure of the orifices 30. Therefore, the discharge pressure of the oil pump 3 also falls slowly, and during this time, the spool 20 of the priority flow rate control valve 4 displaces in a direction which increases the application ratio of section B. Therefore, the change-over from the state of the time *t0*-*t1* when both the power steering device 1 and cargo handling device 2 are driven, to the state after the time *t1* when the cargo handling device 2 is stopped and only the steering device 1 is driven, can be performed without the power steering device 1 suffering a large pressure decrease, as shown by the solid line in the figure.

Also, when there is a shift from the state where both the cargo handling device 2 and power steering device 1 are operating, to another non-cargo handling state of the cargo handling device 2 where the control lever 15A is in the neutral section TN and the control lever 15B is in the descending section LD, kickback can be prevented in the same way as above.

If operation of the steering wheel 7 stops, the load signal pressure from the load signal port 24 becomes low, and correspondingly, the valve spool 20 of the priority flow rate control valve 4 displaces in the direction which increases the application ratio of section A. As a result, a large amount of oil from the oil pump 3 is supplied to the cargo handling device 2. In the cargo handling device 2, when both of the control levers 15A, 15B are held in the non-cargo handling sections TN, LN, LD, the oil of the oil pump 3 which rotates with the minimum rotation speed flows back to the oil tank 8 under the back pressure of the orifices 30, 31. Also in this state, therefore, the pressures of the power steering device 1 and cargo handling device 2 are held at a level at which they are not less than a fixed pressure.

When the operation of the steering wheel 7 is not performed and only the cargo handling device 2 operates, since the load signal pressure is low and feedback pressure is relatively high, the valve spool 20 of the priority flow rate control valve 4 is held in a position where the application ratio of section A is high. According to the operation position of the control levers 15A, 15B, the discharge flow rate of the oil pump 3 increases, and the increased oil is used for tilting the mast or lifting the fork. At this time, the load signal pressure of the power steering device 1 does not change.

In this embodiment, although the orifice 30 is provided in both the tilt control valve 13 and lift control valve 14, prevention of kickback can be achieved even if the orifice 30 is formed in only one of these valves.

However, the following desirable effect is obtained by providing the orifice in both the tilt control valve 13 and lift control valve 14.

Specifically, when two of the orifices 30 are provided, the inner diameter of the orifice 30 can be increased compared with the case where only one of the orifices 30 is formed. As a result, the pressure loss of one of the orifices 30 can be suppressed small. If the pressure loss is large, a large fluid force acts on the spool forming the control valve 13 and lift control valve 14, and a smooth shifting of the control lever 15A, 15B between the sections may not be obtained. It may also cause a remarkable difference in the operation feeling of the two control levers 15A, 15B. By providing the orifices 30 for each valve, this possibility is eliminated, and operation of the control levers 15A, 15B is smooth.

The above is an embodiment wherein the invention is applied to a fork-lift truck having an internal combustion engine as power source for the oil pump 3, but the invention can be applied also to a fork-lift truck wherein the oil pump 3 is driven by a dedicated electric motor.

When the oil pump 3 is driven by an electric motor, even if the main key of the fork-lift truck is ON, in the state where both the steering wheel 7 and cargo handling device 2 are not in operation, the electric motor which drives the oil pump 3 is generally not operating, and supply of oil from the oil pump 3 to the priority flow rate control valve 4 is not performed, However, when the main key is switched ON so that the electric motor can rotate at low speed, as in the case where the oil pump 3 is driven by an internal combustion engine, a small amount of oil is supplied to the priority flow rate control valve 4 from the oil pump 3, and the priority flow rate control valve 4 distributes a small amount of oil mainly to the power steering device 1.

When the oil pump 3 is driven by an electric motor, a sensor which detects the steering speed of the steering wheel 7 or steered wheels is provided. The electric motor performs an acceleration operation corresponding to the steering speed and the operation positions of the control levers 15A, 15B, and correspondingly, the oil pump 3 supplies oil at a flow rate required by the power steering device 1 and/or cargo handling device 2 to the priority flow rate control valve 4.

When operation of the cargo handling device 2 is suspended from the state where both the steering wheel 7 and cargo handling device 2 are operating, the operation positions of the control levers 15A, 15B are then in the neutral sections TN, LN, so the rotation speed of the electric motor falls compared to what it was when the cargo handling device 2 was operating. As a result, the oil supplied to the priority flow rate control valve 4 from the oil pump 3 decreases. When the steering operation of the steering wheel 7 is suspended from the state where both the steering wheel 7 and cargo handling device 2 are operating, since the steering speed then becomes zero, the rotation speed of the electric motor likewise decreases, and the flow rate of oil supplied to the priority flow rate control valve 4 from the oil pump 3 decreases. Even when the oil pump 3 is driven by an electric motor, when operation of the cargo handling device 2 is suspended from the state where both the steering wheel 7 and cargo handling device 2 were operating, the back pressure due to the orifices 30 brings about a desirable effect in preventing kickback.

If both the steering operation of the steering wheel 7 and the operation of the cargo handling device 2 stop, the electric motor suspends operation, and supply of oil from the oil pump 3 to the priority flow rate control valve 4 also stops.

The operation of the priority flow rate control valve 4 is identical to the case where the oil pump 3 is driven by an internal combustion engine.

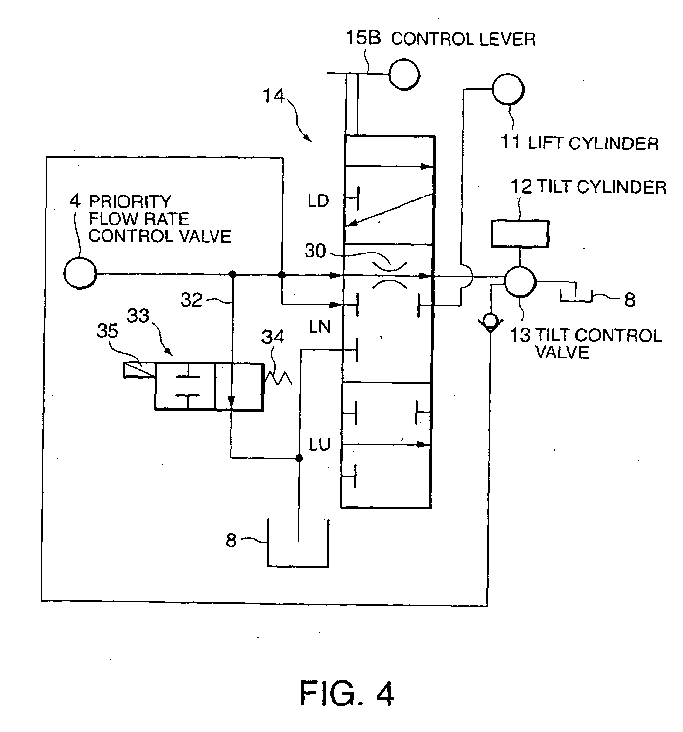

Next, referring to FIG. 4, a second embodiment of this invention will be described.

In this embodiment, the arrangement of the tilt control valve 13 and lift control valve 14 is opposite to that of FIG. 1.

Further, in this embodiment, a bypass passage 32 which flows back to the oil tank 8 from the oil supply line leading from the priority flow rate control valve 4 to the lift control valve 14, is branched. An unload valve 33 is installed in the bypass passage 32. The unload valve 33 has a section which opens the bypass passage 33, and a section which closes the bypass passage 33. The unload valve 33 is normally held in the open section by a valve spring 34, and changes over to the closed section due to excitation of a solenoid 35.

In this embodiment, when the tilt control valve 13 or lift control valve 14 is in the cargo handling section, the solenoid 35 is excited, the unload valve 33 is held in the closed section, and a required cargo handling operation pressure is maintained.

On the other hand, when the cargo handling device 2 shifts from this operation state to the non-cargo handling state wherein both the tilt control valve 13 and lift control valve 14 are in the non-cargo handling section, the excitation of the solenoid 35 is stopped after a predetermined time has elapsed, and the unload valve 33 changes over to the open section. The predetermined time is set as the time until the valve spool 20 of the priority flow rate control valve 4 completes displacement in the direction which increases the application ratio of section B, or a larger value.

After the unload valve 33 changes over to the open section, the oil supplied from the priority flow rate control valve 4 flows back to the oil tank 8 via the bypass passage 32.

In this embodiment also, when a cargo handling operation is ended or stopped, since the unload valve 33 returns the oil of the oil supply line to the oil tank 8 after the predetermined time has elapsed, the pressure of the oil supply line is held until the priority flow rate control valve 4 completes displacement corresponding to the end or stop of the cargo handling operation. Therefore, kickback of the power steering device 1 which the rapid pressure decrease of the oil supply line would otherwise cause, can be prevented.

In the first embodiment, even if both the power steering device 1 and cargo handling device 2 are in the non-operating state, the oil of the oil pump 3 which is continuously driven by the internal combustion engine, always flows into the oil tank 8 via the orifices 30 of the tilt control valve 13 and lift control valve 14. Therefore, even in the state where a cargo handling operation has not been performed, back pressure is generated in the oil supply line, and an unproductive pressure loss occurs. According to this embodiment, when a cargo handling operation has not been performed or oil pressure is not used for cargo handling, the oil supplied from the priority flow rate control valve 4 does not pass through the cargo handling device 2 but flows back to the tank 8 directly via the unload valve 33, so pressure loss can be reduced.

Even in a fork-lift truck wherein the oil pump 3 is driven by an electric motor, if the electric motor is always operated so a small oil amount continues being supplied to the cargo handling device 2, by applying this embodiment, a desirable effect is obtained in reducing the pressure loss, and preventing kickback of the power steering device 1.

In this embodiment, as regards circulation of oil supplied from the residual oil discharge port 22 in the non-cargo handling section, the lift control valve 14 is disposed upstream of the tilt control valve 13. However, an identical effect is obtained even if the tilt control valve 13 is disposed upstream of the lift control valve 14, and the bypass passage 32 from the oil supply line leading from the priority flow rate control valve 4 to the tilt control valve 13 is branched.

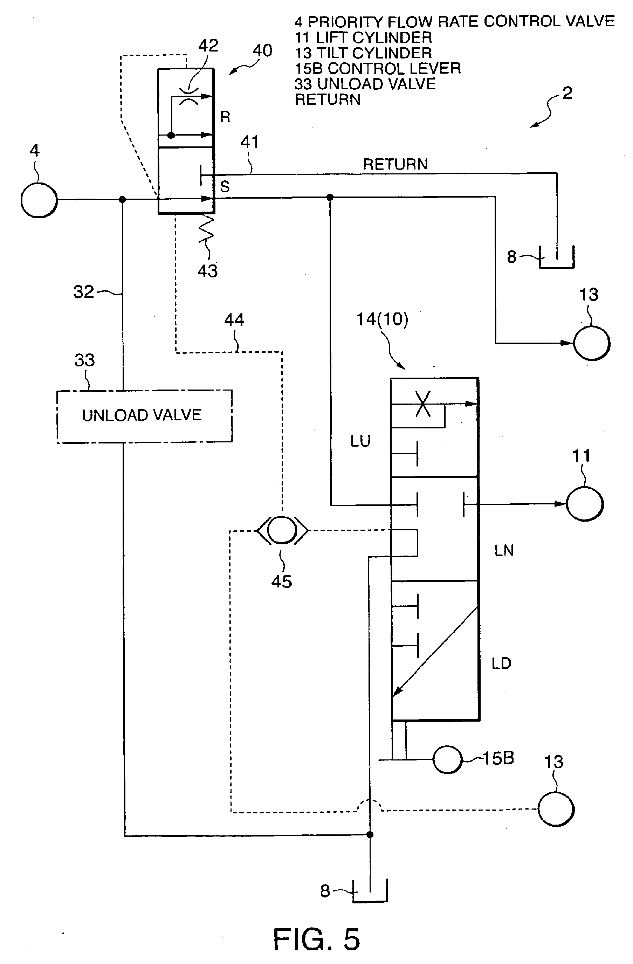

Referring to FIG. 5, a third embodiment of this invention will now be described.

This embodiment relates to the construction of the cargo handling device 2 connected to the residual oil discharge port 22 of the priority control valve 4 in the first embodiment.

As the cargo handling control valve 10, this embodiment uses a cargo handling load sensing type valve.

In FIG. 2 and FIG. 4, in the neutral sections TN, LN, the tilt control valve 13 and the lift control valve 14, which constitute the cargo handling control valve 10, are both open center type spool valves which make oil flow downstream, but the tilt control valve 13 and lift control valve 14 according to this embodiment shut off oil in the neutral sections, i.e., they are closed center type spool valves.

In this embodiment, a return passage 41 which returns oil to the oil tank 8 in the middle of the oil supply line leading from the priority control valve 4 to the cargo handling control valve 10, is connected via a sensing valve 40.

The sensing valve 40 is a spool valve having a service section S which allows circulation in the oil supply line and shuts off the return passage 41 when at least one of the lift control valve 14 and tilt control valve 13 is in the cargo handling sections LU, TU, TD, or the descending section LD, and a return section R which allows circulation in the oil supply line and opens the return passage 41 when both the lift control valve 14 and tilt control valve 13 are in the neutral sections LN, TN.

The return section R has an orifice 42 which offers resistance to oil flowing to the return passage 41 from the oil supply line. The orifice 42 may be formed in the return passage 41 instead of forming it in the sensing valve 40.

The spool is pushed in a direction which increases the application ratio of section S by a spring 43, and by a pilot pressure which becomes low when the control lever 15B of the lift control valve 14 and the control lever of the tilt control valve 13 are both in neutral sections. On the other hand, the oil pressure of the oil supply line acts on the spool in an opposite direction.

The pilot pressure increases in synchronism with oil supply to the cargo handling device 2, and falls when oil supply to the cargo handling device 2 stops, i.e., when both the control lever 15B of the lift control valve 14 and the control lever of the tilt control valve 13 are changed over to the neutral sections LN, TN. In order to realize this function, a shuttle valve 45 is formed in the middle of the pilot pressure passage. The neutral section LN of the lift control valve 14 shuts off the oil supply to the lift cylinder 11 from the oil supply line, and opens the pilot pressure to the oil tank 8. Likewise, the neutral section of the tilt control valve 13 shuts off the oil supply to the tilt cylinder from the oil supply line, and opens the pilot pressure to the oil tank 8. The control valve 13 and lift control valve 14 are connected in parallel with the sensing valve 40.

The operation position of the control lever 15B of the lift control valve 14 and the operation position of the control lever of the tilt control valve 13 are detected by sensors, respectively.

This oil pressure supply device is further provided with a bypass passage 32 which returns the oil supplied to the oil supply line from the priority flow rate control valve 4 to the oil tank 8 upstream of the sensing valve 40. An unload valve 33 is formed in the bypass passage 32.

Like the unload valve 33 shown in FIG. 4, after waiting a predetermined time from when the cargo handling device 2 is in the non-cargo handling state where both the lift control valve 14 and tilt control valve 13 are in the neutral section, the unload valve 33 opens, and the oil supplied to the oil supply line from the priority flow rate control valve 4 bypasses the cargo handling device 2 and returns to the oil tank 8. The predetermined time is set as in the second embodiment.

The remaining construction of the oil pressure supply device according to this embodiment is identical to that of the oil control device of the first embodiment shown in FIG. 2.

In this embodiment, in the state where both the power steering device 1 and cargo handling device 2 are operating, as in the first embodiment, the priority flow rate control valve 4 first preferentially ensures the oil amount supplied to the power steering device 1, and supplies the excess flow rate to the cargo handling device 2.

In the cargo handling device 2, since the tilt control valve 13 and /or lift control valve 14 are in the cargo handling section, the unload valve 33 is held in the service section S.

Also, when the tilt control valve 13 and/or lift control valve 14 are in the cargo handling section, the internal combustion engine is acceleration-controlled, and the discharge flow rate of the oil pump 3 increases. Due to this, the oil required for a cargo handling operation is supplied to the tilt control valve 13 and/or lift control valve 14, and the cargo handling device 2 operates according to the operation position of the cargo handling lever.

When the operation of the cargo handling device 2 stops from the state where both the power steering device 1 and cargo handling device 2 were operating, the tilt control valve 13 and lift control valve 14 are in the neutral sections TN, LN. Correspondingly, the rotation speed of the internal combustion engine falls, and the oil flow rate supplied from the oil pump 3 to the priority flow rate control valve 4 also decreases.

When both the tilt control valve 13 and lift control valve 14 change over to the neutral sections, the pilot pressure is released to the oil tank 8, and falls. On the other hand, oil supplied to the oil supply line from the priority flow rate control valve 4 is prevented from flowing down by the tilt control valve 13 and lift control valve 14 which are in the neutral sections TN, LN, and the pressure rises. As a result, the sensing valve 40 changes over to the return section R, and the oil of the oil supply line flows back from the return passage 41 to the oil tank 8 via the orifice 42. Subsequently, the oil pressure of the oil supply line gradually decreases. After a predetermined time elapses since both the lift control valve 14 and tilt control valve 13 have changed over to the neutral sections, the unload valve 33 opens, and the oil pressure of the oil supply line is then released to the oil tank 8.

In other words, even in the case where operation of the cargo handling device 2 stops from the state where both the power steering device 1 and cargo handling device 2 were operating, the oil pressure of the oil supply line, i.e., the pressure of the residual oil discharge port 22 of the priority flow rate control valve 4 shown in FIG. 2, is held as it is until the priority flow rate control valve 4 completes a displacement corresponding to the end of the cargo handling operation, or stop.

Therefore, also in this embodiment, as in the first and second embodiments, the operation stop of the cargo handling device does not cause a temporary fall of oil pressure supplied to the power steering device 1, and a kickback effect, wherein operation stop of the cargo handling device 2 causes the control force of the steering wheel 7 to temporarily increase, is prevented.

According to this embodiment, the following desirable features are obtained.

In this embodiment, the orifice 42 is formed in the return section R of the sensing valve 40. Therefore, the pressure of the oil supply line from when both the lift control valve 14 and tilt control valve 13 change over to the neutral sections, to when the unload valve 33 opens, can be arbitrarily controlled according to the design of the orifice 42.

This embodiment can be applied also to a fork-lift truck wherein the oil pump 3 is driven by an electric motor. In this case, when both the lift control valve 14 and tilt control valve 13 change over to the neutral sections TN, LN, the rotation speed of the electric motor is decreased from when the cargo handling device 2 is operating, and the flow rate of oil supplied from the oil pump 3 to the priority flow rate control valve 4 is decreased.

The contents of Tokugan 2005-143875, with a filing date of May 17, 2005 in Japan, are hereby incorporated by reference.

Although the invention has been described above by reference to certain embodiments of the invention, the invention is not limited to the embodiments described above. Modifications and variations of the embodiments described above will occur to those skilled in the art, within the scope of the claims.

For example, in all the above embodiments, this invention is applied to a "full oil power steering device" which feed-forward controls the steering angle of the steered wheels by controlling the amount of oil supplied to the steering cylinder 6. However, the invention may be applied also to a power steering device which feeds back the steering angle of the steered wheels to the oil supplied to the steering cylinder 6.

The embodiments of this invention in which an exclusive property or privilege is claimed are defined as follows:

## Claims

1. An oil pressure supply device which supplies pressurized oil to an oil pressure power steering device (1) and an oil pressure cargo handling device (2) of an industrial vehicle, the device comprising:
an oil pump (3) which increases a pressurized oil discharge flow rate with operation of the cargo handling device (2), and decreases the pressurized oil discharge flow rate with operation stop of the cargo handling device (2);
a priority flow rate control valve (4) which preferentially distributes pressurized oil discharged by the oil pump (3) to the power steering device (1), and distributes excess oil to the cargo handling device (2);
a cargo handling control valve (10, 13, 14) which changes over between a cargo handling section (TU, TD, LU) which supplies the pressurized oil supplied from the priority flow rate control valve (4) to the cargo handling device (2), and a non-cargo handling section (TN, LN, LD) which does not supply the pressurized oil supplied from the priority flow rate control valve (4) to the cargo handling device (2) according to an external operation; **characterised by**
an orifice (30, 31, 42) which drains pressurized oil supplied to the cargo handling control valve (10, 13, 14) under a predetermined back pressure when the non-cargo handling section (TN, LN, LD) is selected.

2. The oil pressure supply device as defined in Claim 1, wherein the cargo handling control valve (10, 13, 14) is an open center type valve having a drain passage which drains the pressurized oil supplied from the priority flow rate control valve (4) in the non-cargo handling section, and the orifice (30, 31) is provided in the drain passage.

3. The oil pressure supply device as defined in Claim 2, wherein the oil pressure supply device comprises plural cargo handling control valves (13, 14), and all the cargo handling control valves (13, 14) are disposed so that the drain passages of all the cargo handling control valves (13, 14) are connected in series in a state where all the cargo handling control valves (13, 14) are in the non-cargo handling section (TN, LN, LD).

4. The oil pressure supply device as defined in Claim 1, further comprising a sensing valve (40) in an oil passage of the pressurized oil supplied form the priority flow rate control valve (4) to the cargo handling control valve (10, 13, 14), the sensing valve (40) comprising a drain passage which drains the pressurized oil in response to a change-over operation of the cargo handling control valve (10, 13, 14) to the non-cargo handling section (TN, LN, LD), wherein the orifice (42) is formed in the drain passage.

5. The oil pressure supply device as defined in Claim 4, further comprising a second drain passage (32) connected to the oil passage between the priority flow rate control valve (4) and the sensing valve (40), and an unload valve (33) which opens the second drain passage (32) with a predetermined time delay from the change-over to the non-cargo handling section (TN, LN, LD) of the cargo handling control valve (10, 13, 14).

6. The oil pressure supply device as defined in Claim 5, wherein the cargo handling control valve (10, 13, 14) is a closed center type valve which shuts off oil flow in the non-cargo handling section (TN, LN, LD).

7. The oil pressure supply device as defined in any one of Claim 1 through Claim 6, wherein the oil pump (3) is driven by an internal combustion engine.

8. The oil pressure supply device as defined in any one of Claim 1 through Claim 6, wherein the oil pump (3) is driven by an electric motor.

## Patentansprüche

1. Öldruckversorgungsvorrichtung, die mit Druck beaufschlagtes Öl zu einer Öldruck-Servolenkungsvorrichtung (1) und einer Öldruck-Frachthandhabungsvorrichtung (2) eines Industriefahrzeugs zuführt, wobei die Vorrichtung umfasst:
eine Ölpumpe (3), welche eine Auslass-Durchflussrate des mit Druck beaufschlagten Öls bei Betrieb der Frachthandhabungsvorrichtung (2) erhöht und die Auslass-Durchflussrate des mit Druck beaufschlagten Öls bei Betriebsende der Frachthandhabungsvorrichtung (2) verringert;
ein Vorrangs-Durchflussraten-Steuerventil (4), das vorzugsweise mit Druck beaufschlagtes Öl, das von der Ölpumpe (3) ausgegeben wird, zur Servolenkungsvorrichtung (1) verteilt und überschüssiges Öl an die Frachthandhabungsvorrichtung (2) verteilt;
ein Frachthandhabungs-Steuerventil (10, 13, 14), das gemäß einer externen Operation zwischen einem Frachthandhabungsabschnitt (TU, TD, LU), der das mit Druck beaufschlagte Öl, das von dem Vorrangs-Durchflussraten-Steuerventil (4) zugeführt wird, zur Frachthandhabungsvorrichtung (2) zuführt, und einem Nicht-Frachthandhabungsabschnitt (TN, LN, LD), der das mit Druck beaufschlagte Öl, das von dem Vorrangs-Durchflussraten-Steuerventil (4) zugeführt wird, nicht zur Frachthandhabungsvorrichtung (2) zuführt, umschaltet; **gekennzeichnet durch**:
eine Öffnung (30, 31, 42), welche das mit Druck beaufschlagte Öl, das zum Frachthandhabungs-Steuerventil (10, 13, 14) zugeführt wird, unter einem vorbestimmten Gegendruck ableitet, wenn der Nicht-Frachthandhabungsabschnitt (TN, LN, LD) ausgewählt ist.

2. Öldruckversorgungsvorrichtung nach Anspruch 1, wobei das Frachthandhabungs-Steuerventil (10, 13, 14) ein Ventil mit offener Mitte mit einem Ableitdurchgang ist, welcher das mit Druck beaufschlagte Öl, das von dem Vorrangs-Durchflussraten-Steuerventil (4) zugeführt wird, in den Nicht-Frachthandhabungsabschnitt ableitet, und die Öffnung (30, 31) in dem Ableitdurchgang vorgesehen ist.

3. Öldruckversorgungsvorrichtung nach Anspruch 2, wobei die Öldruckversorgungsvorrichtung viele Frachthandhabungs-Steuerventile (13, 14) umfasst und alle Frachthandhabungs-Steuerventile (13, 14) so angeordnet sind, dass die Ableitdurchgänge aller Frachthandhabungs-Steuerventile (13, 14) in einem Zustand, in dem sich alle Frachthandhabungs-Steuerventile (13, 14) im Nicht-Frachthandhabungsabschnitt (TN, LN, LD) befinden, in Reihe verbunden sind.

4. Öldruckversorgungsvorrichtung nach Anspruch 1, ferner umfassend ein Messventil (40) in einem Öldurchgang des mit Druck beaufschlagten Öls, das von dem Vorrangs-Durchflussraten-Steuerventil (4) zum Frachthandhabungs-Steuerventil (10, 13, 14) zugeführt wird, wobei das Messventil (40) einen Ableitdurchgang umfasst, der das mit Druck beaufschlagte Öl in Reaktion auf einen Umschaltvorgang des Frachthandhabungs-Steuerventils (10, 13, 14) zum Nicht-Frachthandhabungsabschnitt (TN, LN, LD) ableitet, wobei die Öffnung (42) in dem Ableitdurchgang ausgebildet ist.

5. Öldruckversorgungsvorrichtung nach Anspruch 4, ferner umfassend einen zweiten Ableitdurchgang (32), der mit dem Öldurchgang zwischen dem Vorrangs-Durchflussraten-Steuerventil (4) und dem Messventil (40) verbunden ist, und ein Entlastungsventil (33), welches den zweiten Ableitdurchgang (32) mit einer vorbestimmten Zeitverzögerung ab der Umschaltung des Frachthandhabungs-Steuerventils (10, 13, 14) zum Nicht-Frachthandhabungsabschnitt (TN, LN, LD) öffnet.

6. Öldruckversorgungsvorrichtung nach Anspruch 5, wobei das Frachthandhabungs-Steuerventil (10, 13, 14) ein Ventil mit geschlossener Mitte ist, welches den Ölfluss im Nicht-Frachthandhabungsabschnitt (TN, LN, LD) sperrt.

7. Öldruckversorgungsvorrichtung nach einem der Ansprüche 1 bis 6, wobei die Ölpumpe (3) von einem Verbrennungsmotor angetrieben wird.

8. Öldruckversorgungsvorrichtung nach einem der Ansprüche 1 bis 6, wobei die Ölpumpe (3) von einem Elektromotor angetrieben wird.

## Revendications

1. Dispositif de fourniture à pression d'huile qui fournit de l'huile pressurisée à un dispositif de direction assistée à pression d'huile (1) et un dispositif de manipulation de marchandises à pression d'huile (2) d'un véhicule industriel, le dispositif comprenant :
une pompe à huile (3) qui augmente un débit de décharge d'huile pressurisée avec le fonctionnement du dispositif de manipulation de marchandises (2) et diminue le débit de charge d'huile pressurisée avec un arrêt de fonctionnement du dispositif de manipulation de marchandises (2) ;
une soupape de commande de débit de priorité (4) qui distribue préférentiellement l'huile pressurisée déchargée par la pompe à huile (3) au dispositif de direction assistée (1) et distribue l'huile en excès au dispositif de manipulation de marchandises (2) ;
une soupape de commande de manipulation de marchandises (10, 13, 14) qui commute entre une section de manipulation de marchandises (TU, TD, LU) qui fournit l'huile pressurisée fournie de la soupape de commande de débit de priorité (4) au dispositif de manipulation de marchandises (2) et une section de manipulation d'articles non-marchandises (TN, LN, LD) qui ne fournit pas l'huile pressurisée fournie de la soupape de commande de débit de priorité (4) au dispositif de manipulation de marchandises (2) selon un fonctionnement externe ; **caractérisé par**
un orifice (30, 31, 42) qui draine l'huile pressurisée fournie à la soupape de commande de manipulation de marchandises (10, 13, 14) sous une contre-pression prédéterminée lorsque la section de manipulation d'articles non-marchandises (TN, LN, LD) est sélectionnée.

2. Dispositif de fourniture à pression d'huile selon la revendication 1, dans lequel la soupape de commande de manipulation de marchandises (10, 13, 14) est une soupape de type centre ouvert comportant un passage de drain qui draine l'huile pressurisée fournie à partir de la soupape de commande de débit de priorité (4) dans la section de manipulation d'articles non-marchandises, et l'orifice (30, 31) est disposé dans le passage de drain.

3. Dispositif de fourniture à pression d'huile selon la revendication 2, dans lequel le dispositif de fourniture à pression d'huile comprend plusieurs soupapes de commande de manipulation de marchandises (13, 14) et toutes les soupapes de commande de manipulation de marchandises (13, 14) sont disposées de sorte que les passages de drain de toutes les soupapes de commande de manipulation de marchandises (13, 14) sont raccordés en série dans un état où toutes les soupapes de commande de manipulation de marchandises (13, 14) sont dans la section de manipulation d'articles non-marchandises (TN, LN, LD).

4. Dispositif de fourniture à pression d'huile selon la revendication 1, comprenant en outre une soupape de détection (40) dans un passage d'huile de l'huile pressurisée fournie de la soupape de commande de débit de priorité (4) à la soupape de commande de manipulation de marchandises (10, 13, 14), la soupape de détection (40) comprenant un passage de drain qui draine l'huile pressurisée en réponse à un fonctionnement de commutation de la soupape de commande de manipulation de marchandises (10, 13, 14) à la section de manipulation d'articles non-marchandises (TN, LN, LD), dans lequel l'orifice (42) est formé dans le passage de drain.

5. Dispositif de fourniture à pression d'huile selon la revendication 4, comprenant en outre un second passage de drain (32) raccordé au passage d'huile entre la soupape de commande de débit de priorité (4) et la soupape de détection (40) ainsi qu'une soupape de déchargement (33) qui ouvre le second passage de drain (32) avec un retard de temps prédéterminé à partir de la commutation vers la section de manipulation d'articles non-marchandises (TN, LN, LD) de la soupape de commande de manipulation de marchandises (10, 13, 14).

6. Dispositif de fourniture à pression d'huile selon la revendication 5, dans lequel la soupape de commande de manipulation de marchandises (10, 13, 14) est une soupape de type centre fermé qui obture l'écoulement d'huile dans la section de manipulation d'articles non-marchandises (TN, LN, LD).

7. Dispositif de fourniture à pression d'huile selon l'une quelconque des revendications 1 à 6, dans lequel la pompe à huile (3) est entraînée par un moteur à combustion interne.

8. Dispositif de fourniture à pression d'huile selon l'une quelconque des revendications 1 à 6, dans lequel la pompe à huile (3) est entraînée par un moteur électrique.
